# EUROPEAN PATENT APPLICATION

(11) **EP 2 477 377 A1**
(43) Date of publication of application: **18.07.2012**
(21) Application number: 11305039.7
(22) Date of filing: 14.01.2011
(51) Int. Cl.: H04L 29/08

(54) **Peer node and method for improved peer node selection**

(71) Applicant: Alcatel Lucent, 75007 Paris (FR)
(72) Inventor: Van Ackere, Michel, 9100, Sint-Niklaas (BE); Migdisoglu, Murat, 2018, Antwerpen (BE); Pranav, Sharma, 2018, Antwerpen (BE)
(74) Representative: D'Halleweyn, Nele Veerle Trees Gertrudis

(57) **Abstract**

Peer node adapted to exchange data with other peer nodes through a peer-to-peer protocol, said peer node comprising a categorization and selection module adapted to receive peer node identifiers extracted from messages received from said other peer nodes; and to categorize said peer node identifiers according to one or more criteria in one of at least two categories; and to select a peer node identifier as a peer node identifier to be used for communication through the peer-to-peer protocol, if said peer node identifier was categorized in a first category of said at least two categories.

## Description

### FIELD OF THE INVENTION

The invention generally relates to a peer node adapted to communicate with other peer nodes through a peer-to-peer protocol, and to a method for selecting a peer node for communicating between peer nodes through a peer-to-peer protocol.

### BACKGROUND

Protocols of the prior art that are used in the processing of peer-to-peer communication, such as the BitTorrent (BT) protocol, Distributed Hash Table (DHT) protocol, Peer Exchange (PEX) protocol, Local Peer Discovery (LPD) protocol, etc. usually favour communication between strongly distributed peer nodes. This can lead to a non-optimal communication between peer nodes, even though other peer nodes exist that allow for a better communication. With the existing protocols often "far away" peer nodes are used requiring transatlantic links and/or multiple IP hops where cheaper nearby peer nodes are available.

Typically a peer node will build up a view on foreign peer nodes from messages that it receives from those or other foreign peer nodes. Often, foreign peer nodes that are learned first are difficult to replace with other foreign peer nodes that are learned later. Further, the built-up is typically more or less random and mainly defined by the foreign peer nodes from which those messages arrive.

### SUMMARY OF THE INVENTION

The object of the invention is to provide a peer node and a method allowing an improved communication between peer nodes.

According to an embodiment of the invention there is provided a peer node adapted to communicate with other peer nodes through a peer-to-peer protocol. The peer node comprises a categorization and selection module adapted to receive peer node identifiers for messages received at said peer node from said other peer nodes; to categorize the received peer node identifiers according to one or more criteria in one of at least two categories; and to select the peer node identifier as a peer node identifier to be used for the communication through the peer-to-peer protocol, if said peer node identifier has been categorized in a first category of the at least two categories.

Through the use of such a categorization and selection module the peer node can be made aware of certain preferred characteristics that peer nodes ideally should have by defining one or more suitable criteria for categorizing the peer node identifiers. If a peer node belongs to a first category (i.e. a preferred category) the associated peer node is directly selected to be used by the peer-to-peer protocol. In other words a peer node can be controlled by setting the one or more criteria, e.g. one or more criteria defined by an Internet Service Provider (ISP). In that way the behaviour of the peer node can be influenced. If the peer node identifier is categorized in a second category (a non-preferred category), then the normal selection rules (e.g. selection rules defined by the peer node) may be used. According to a possible embodiment of the peer node, the module is further adapted to apply a set of peer selection rules if the peer node identifier belongs to a second category of the at least two categories. Note that this set of selection rules can be very basic and can e.g. consist of putting the peer nodes of the second category in a contact list according to the order of receipt.

In that way, while newly received peer nodes of the first category are allowed to bypass the normal selection rules and are immediately selected for further communication, the received peer nodes of the second category are selected using the normal selection rules.

The term "peer node" as used in the context of the present invention has to be interpreted in the broad sense and may refer to a plurality of devices of a user, which allow the user to exchange data through a peer-to-peer protocol. In that regard it is noted that the categorization and selection module may either be built-in into the peer node or may be implemented as a new configuration of an existing peer node.

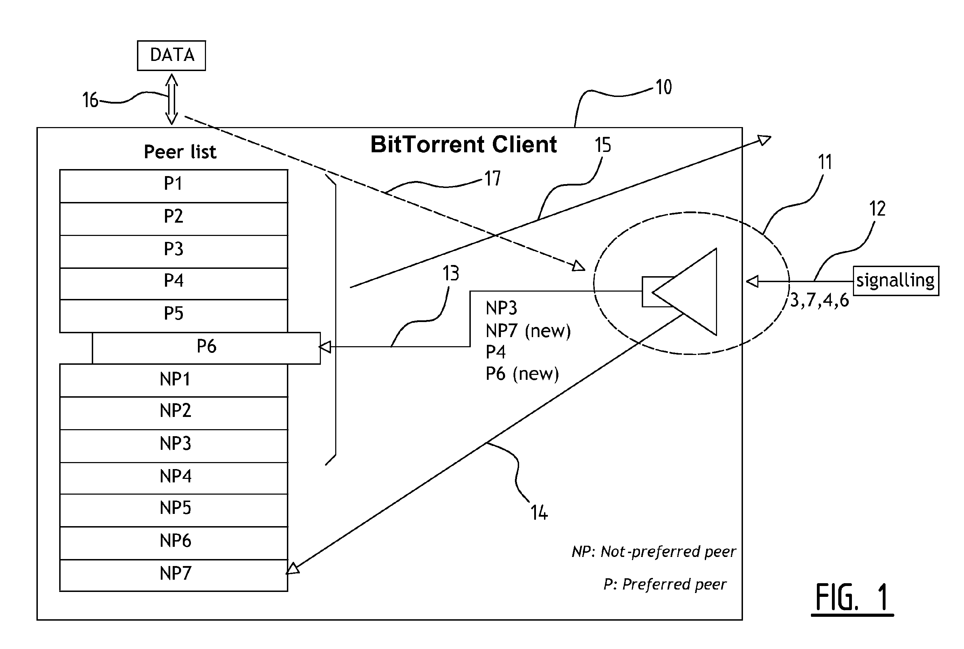

According to a preferred embodiment, the peer node is adapted to distribute data through a peer-to-peer file sharing protocol, such as the BitTorrent (BT) protocol. Other file sharing protocols that may be used are e.g. Gnutella, eDonkey, Kazaa, Freenet. Further the peer node may comprise a Peer Exchange (PEX) client and/or a Distributed Hash Table (DHT) client and/or a Local Peer Discovery (LPD) client. It is preferred that the categorization and selection module is implemented in the peer-to-peer data exchange client such as a BT client. However, those modules may also be implemented in the peer-to-peer signalling clients such as a DHT, PEX or LPD client. This will be explained in more detail when referring to figures 1-3.

According to a preferred embodiment the categorization and selection module is adapted to categorize a peer node identifier using a weight value based on characteristics of the peer node associated with the peer node identifier. Those characteristics can e.g. be characteristics related to the speed of the peer node, characteristics related to the Internet service provider to which the peer node belongs, the type of the peer-to-peer file sharing protocol used by the peer node, etc. Typically, the one or more criteria used to categorize a peer node identifier will use a threshold value, wherein, if the weight value is below the threshold value, the node identifier is categorized in a first category, and if the weight value is above this threshold value, the peer node identifier is identified is a second category. Such weight values may e.g. be uploaded in the peer node by an ISP and may be periodically updated. Alternatively a peer node may be locally configured with the weight values of the peer nodes.

According to further preferred embodiments, the categorization and selection module is adapted to categorize a peer node identifier using an IP address and/or a UDP/TCP-port of the peer node associated with said peer node identifier. Typically, the received foreign peer nodes will be sorted according to whether their IP address and/or TCP-port match certain preferred IP addresses and/or TCP-ports or not. More preferably, the categorization and selection module is adapted to verify whether an IP address associated with a peer node identifier belongs to a predefined subnet, and to categorize the peer node identifier accordingly. According to an embodiment, the categorization and selection module is adapted to obtain the number of IP hops, or the roundtrip time between the peer node and a peer node associated with the peer node identifier, or a similar variable and to take into account said number, roundtrip time or similar variable when categorizing the peer node identifier. Alternatively or in addition thereto, the categorization and selection module may be adapted to obtain the number of successful interactions between the peer node and another peer node associated with the peer node identifier, and to take into account said number when categorizing the peer node identifier. Typically, a node identifier will be classified as a preferred node if the number of hops is below a specified threshold value and as a non-preferred node if the number of nodes is equal to this specified threshold value. A similar type of criterion can be used for the number of successful interactions. The categorization and selection module may e.g. obtain the number of IP hops or the roundtrip time using probes. The number of successful interactions could e.g. be counted by the peer node.

According to a preferred embodiment the peer node further comprises a connection set-up module adapted to set up a connection for data download to a peer node taking into account the category associated with the peer node as determined by the categorization and selection module. This setting of a connection may use TCP or UDP, or any other suitable data transfer protocol. Note that in a possible embodiment, the peer node may be allowed to set up more concurrent connections for download than the available number of peer nodes of the first category. In that case, the peer node may also set up connections for the peer nodes of the second category. E.g. for BitTorrent clients, the maximum number of concurrent TCP connections is configurable, and therefore, such a BitTorrent client could be implemented with the features described above.

Although a typical embodiment of the invention will have a categorization and selection module categorizing the node identifiers in two categories (a preferred and a non-preferred category), the skilled person will understand that also more categories could be implemented within the scope of the invention.

According to another aspect of the invention there is provided a method for selecting a peer node to be used for communicating between peer nodes through a peer-to-peer protocol. The method comprises receiving at a peer node messages from other peer nodes containing one or more peer node identifiers; categorizing each peer node identifier of the one or more peer node identifiers according to one or more criteria in one of at least two categories; and, if a peer node identifier is categorized in a first category of the at least two categories selecting the peer node identifier as a peer node to be used for communicating through the peer-to-peer protocol.

According to a possible embodiment of the method of the invention, if a peer node identifier is categorized in a second category of the at least two categories, a set of selection rules (e.g. defined by the peer node) is applied to determine whether or not the peer should be used for communicating through the peer-to-peer protocol and to determine in which order the selected peer nodes of the second category should be contacted.

According to a preferred embodiment of the method, the peer node is processing peer-to-peer communications through a peer-to-peer file sharing protocol, such as the BitTorrent protocol.

According to preferred embodiments, the one or more criteria use:
- a weight value based on the characteristics of the peer node associated with the peer node identifier, see the examples of weight values given above; and/or
- an IP address and/or a UDP/TCP-port of the peer node associated with the peer node identifier.

According to a preferred embodiment, the categorizing according to one or more criteria comprises verifying whether an IP address associated with a peer node identifier belongs to a predefined subnet, and categorizing the peer node identifier accordingly.

According to yet another aspect of the invention there is provided a computer program for performing any of the steps of the above disclosed embodiments of the method of the invention, and in particular the categorizing and/or the selecting step. Note that the criteria to be used for the categorization could be implemented in separate computer programs that could e.g. be installed by an operator from a distance. In that way, the criteria can be easily updated when needed. Further the invention also relates to the downloading of such a program and to a storage medium for encoding such a program in machine-readable and machine-executable form.

### BRIEF DESCRIPTION OF THE FIGURES

The accompanying drawings are used to illustrate presently preferred non-limiting exemplary embodiments of the present invention. The above and other advantages, features and objects of the invention will become more apparent, and the invention will be better understood from the following detailed description when read in conjunction with the accompanying drawings, in which:
Figure 1 illustrates schematically a first exemplary embodiment of a peer node of the invention;
Figure 2 illustrates schematically a second exemplary embodiment of the peer node of the invention;
Figure 3 illustrates a third exemplary embodiment of the peer node of the invention; and
Figure 4 is a flowchart for illustrating an exemplary embodiment of the method of the invention.

Figure 1 illustrates a first embodiment of a peer node of the invention in the case where the BitTorrent protocol is used. In other words, here the peer node comprises a BitTorrent client 10 having a signalling interface 12 and a data interface 16. The BitTorrent client is provided with a categorization and selection module 11, also called preference filter. This categorization and selection module 11 can be integrated in the BitTorrent client, e.g. hardcoded in the client or dynamically uploaded in the client. Messages containing peer node identifiers of other peer nodes, in particular foreign peer nodes, are received at the categorization and selection module 11, see arrow 12. The received peer node identifiers are sorted by the categorization and selection module 11 into different categories. This sorting may be implemented in different ways. According to an exemplary embodiment, the categorization and selection module 11 verifies whether the IP address and TCP-port combinations associated with the received peer node identifier match predefined preferred IP address and TCP-port combinations or not.

In the example of figure 1 four node identifiers are received, namely node identifiers 3, 7, 4 and 6. Nodes 3 and 7 are categorized in the category of non-preferred peer nodes, while node identifiers 4 and 6 are categorized in the category of preferred peer nodes. The new peer nodes are added in the peer node list in accordance with their category. Note that the treatment of the non-preferred node identifiers (see arrow 14), may consist of subjecting those identifiers to selection rules defined by the user. Using such a categorized peer node list, the BitTorrent client can then by preference set up one or more connections, e.g. TCP or UDP connections, for data download to the preferred foreign peer nodes, in the example peer nodes P1 to P6. In the event that the BitTorrent client can set up more concurrent connections for the download than the available number of preferred peer nodes, it may also set up connections to the non-preferred foreign peer nodes.

In the example of figure 1, the categorization and selection module or preference filter could be a module which is installed from over the network, e.g. by an operator. By introducing such a filter in the peer node, the BitTorrent client is made to select certain peer nodes which are categorized as preferred peer nodes by the categorization and selection module.

Note that the messages 12 received at the categorization and selection module 11 could use any protocol under the application level, e.g. the DHT protocol, the PEX protocol, the Local Peer Discovery protocol or the tracker oriented BitTorrent signalling protocol. Further the categorization and selection module 11 may also be adapted to learn from messages received on the data plane 16, see arrow 17, e.g. requests for data interaction from other peer nodes containing one or more peer node identifiers.

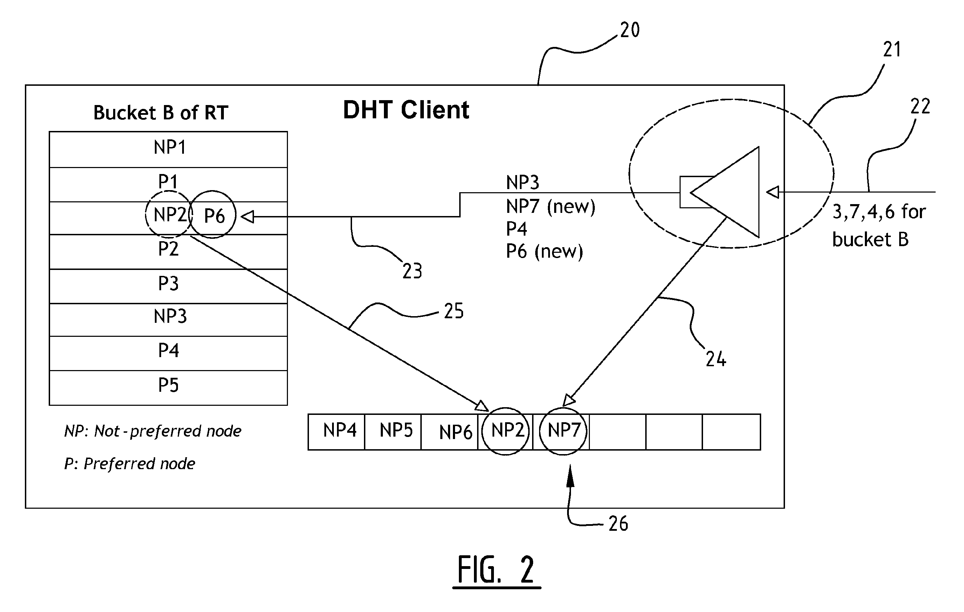

Figure 2 illustrates an exemplary embodiment where the peer node comprises a DHT client. Note that this is not a limiting example, and that the skilled person will understand that the present invention is equally applicable for other protocols, such as PEX, etc. As in the example of figure 1 the received foreign peer nodes (see arrow 22) are sorted by a categorization and selection module 21, e.g. according to whether their IP address and UDP-port combinations match certain preferred IP address and UDP-port combinations. In DHT there is typically provided a node space which is filled with node identifiers using a "fill and split in buckets" technique. When a node ID for a preferred foreign peer node is meant for an already completely filled bucket, then the preferred foreign peer node replaces a non-preferred foreign peer node without waiting for that non-preferred foreign peer node to become "questionable" or "bad" according to DHT standards. In the example of figure 2 three node identifiers (3, 7, 4 and 6) are received for bucket B of the routing table (RT). Node identifier 6 corresponds with a new peer node which is categorized as a preferred peer node. This preferred peer node replaces a non-preferred peer node NP 2 in bucket B. This may e.g. be any non-preferred peer node or the oldest one. The non-preferred peer node that is replaced in the routing table may be pushed into a replacement cache 26 for the bucket from which it has been removed, provided that the replacement cache 26 still has empty places, see arrow 25.

Further, non-preferred node identifiers, such as node identifier 7 in the example of figure 2 may also be placed in the cache 26. The treatment of the non-preferred foreign peer nodes may be kept the same as in the prior art DHT clients where selection rules may be defined by a user. Note that according to the implemented selection rules, it may be that this peer node identifier 7 is put in bucket B of the routing table provided that Bucket B would not yet be full. Note that the implementation of the DHT client of figure 2 can be combined with the implementation of the BT client of figure 1. In that way DHT messages received at the signalling plane of the BT client may contain preferred peer node identifiers, and for those identifiers a "double" categorization is done before arriving in the peer list of the BT client.

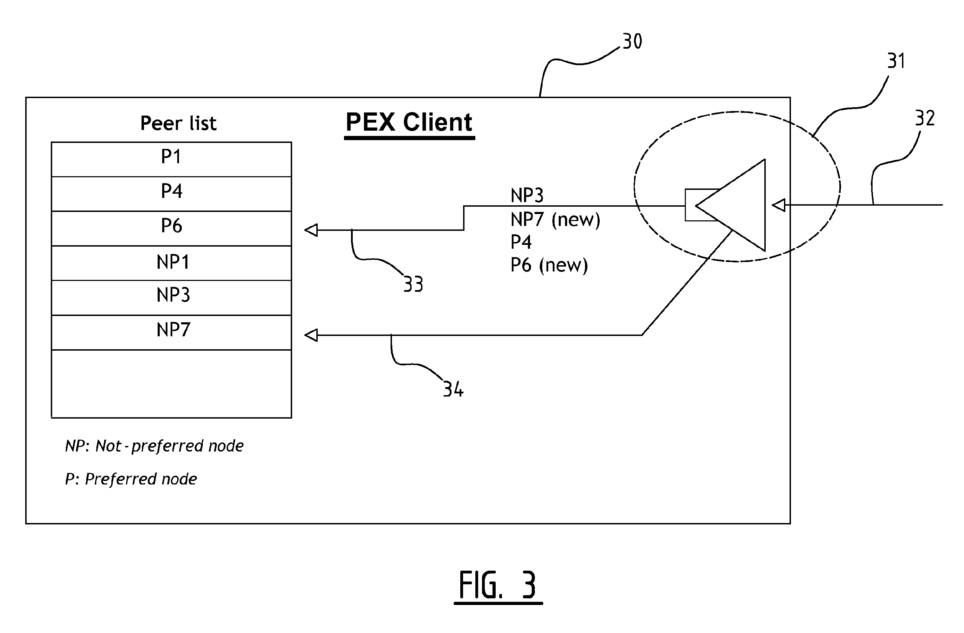

Figure 3 illustrates schematically a third exemplary embodiment of the invention, where the peer node comprises a PEX client 30. PEX messages are received at a signalling plane, see arrow 32 and treated by a categorization and selection module 31. As in the example of figure one the new peer node identifiers NP7 and P6 are inserted in the peer list. Again the implementation of the PEX client of figure 3 can be combined with the implementation of the BT client of figure 1 and/or with the implementation of the DHT client of figure 2. In that way PEX messages received at the signalling plane of the BT client may contain preferred peer node identifiers, and for those identifiers a "double" categorization is done before arriving in the peer list of the BT client.

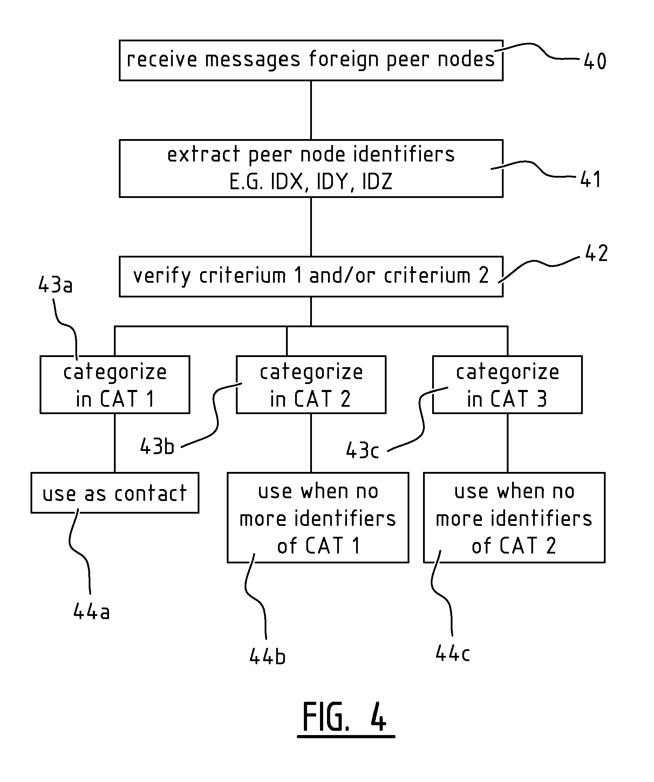

Figure 4 illustrates schematically an embodiment of the method of the invention. In a first step a peer node receives messages from foreign peer nodes. Those messages can e.g. be signalling messages such as DHT messages, PEX messages or data request messages containing node identifiers of other peer nodes. In a second step 41 the node identifiers are extracted out of the received messages. In the example of figure 4 identifiers IDX, IDY and IDZ are extracted. In a following step 42 one or more criteria are verified in order to categorize the node identifiers in a category of a plurality of categories. Here the node identifiers are categorized in three categories: CAT1, CAT2 and CAT3, see steps 43a-c. In the illustrated example the first criterion could e.g. be whether the IP address and/or UDP-port matches certain preferred IP addresses and/or UDP-ports. The second criterion could e.g. be whether certain cost values such as the speed of the peer node associated with the node identifiers, the ISP to which the node identifier belongs, etc. are within a predetermined range. CAT1 could then e.g. correspond with identifiers fulfilling both criteria, CAT2 with identifiers fulfilling one of the criteria and CAT3 with identifiers fulfilling none of the criteria. If it is determined that the node identifier belongs to CAT1, then the node identifier is immediately stored to be used for communication through the peer-to-peer protocol, see step 44a. If the node identifier is categorized as CAT2, then the peer node is only contacted when no more peer identifiers of CAT1 are available, see step 44b. If the node identifier is categorized as CAT3, then the peer node is only contacted when no more peer identifiers of CAT2 are available, see step 44C. Note that this is only an exemplary embodiment and that e.g. more or less criteria and/or more or less categories could be used. Further additional selection rules may be applicable on peer node identifiers of certain categories.

Embodiments of the invention allow for preferred peer node selection for BitTorrent data exchange. Such preferred peer node selection allows promoting those peer nodes for which the cost of BitTorrent data exchanges is known to be small compared to the cost of BitTorrent data exchanged with more or less randomly retrieved peer nodes. Since BitTorrent data exchange consumes a major part of the ISP network resources, such a preferred peer node selection promises substantial cost savings. Proposed embodiments allow for a peer node selection which is better tailored to ISP requirements, wherein the ISP can at least partly control the behaviour of the client.

In the example of DHT the proposed solution makes the filling of the routing table of DHT node more dynamic in the sense that the DHT node can better adapt its operation to the preferred environment.

While the principles of the invention have been set out above in connection with specific embodiments, it is to be clearly understood that this description is merely made by way of example and not as a limitation of the scope of protection which is determined by the appended claims.

## Claims

1. Peer node adapted to exchange data with other peer nodes through a peer-to-peer protocol, said peer node comprising a categorization and selection module adapted
- to receive peer node identifiers extracted from messages received from said other peer nodes; and
- to categorize said peer node identifiers according to one or more criteria in one of at least two categories; and
- to select a peer node identifier as a peer node identifier to be used for communication through the peer-to-peer protocol, if said peer node identifier was categorized in a first category of said at least two categories.

2. Peer node of claim 1, wherein said categorization and selection module is further adapted to apply a set of peer node selection rules, if said peer node identifier belongs to a second category of said at least two categories.

3. Peer node of claim 1 or 2, wherein the peer node is adapted to distribute data through a peer-to-peer file sharing client and the categorization and selection module is integrated in said peer-to-peer file sharing client.

4. Peer node of any of the previous claims, wherein the categorization and selection module is adapted to categorize a peer node identifier using a weight value based on characteristics of the peer node associated with said peer node identifier.

5. Peer node of any of the previous claims, wherein the categorization and selection module is adapted to categorize a peer node identifier using an IP-address and/or a UDP/TCP-port of the peer node associated with said peer node identifier.

6. Peer node of claim 5, wherein the categorization and selection module is adapted to verify whether an IP-address associated with a peer node identifier belongs to a predefined subnet, and to categorize said peer node identifier accordingly.

7. Peer node of any of the previous claims, wherein the categorization and selection module is adapted to categorize a peer node identifier in either one of two categories: a preferred peer node category or a non-preferred peer node category.

8. Peer node of any of the previous claims, wherein the categorization and selection module is adapted to obtain the number of IP-hops between the peer node and another peer node associated with the peer node identifier, or a variable representative for said number; and to take into account said number or variable when categorizing said peer node identifier; and/or
to obtain the number of successful interactions between the peer node and another peer node associated with the peer node identifier, or a variable representative for said number; and to take into account said number or variable when categorizing said peer node identifier.

9. Peer node of any of the previous claims, wherein the peer node further comprises a connection set-up module adapted to set-up a connection for data download to a peer node taking into account the category associated with said peer node as determined by the categorization and selection module.

10. Peer node of any of the previous claims, wherein the peer node comprises a Peer Exchange (PEX) client and/or a Distributed Hash Table (DHT) client and/or a Local Peer Discovery (LPD) client and/or a tracker oriented BitTorrent signalling client.

11. Method for selecting a peer node to be used for communicating between peer nodes through a peer-to-peer protocol, said method comprising at a peer node:
- receiving messages from other peer nodes containing one or more peer node identifiers;
- categorizing each peer node identifier of said one or more peer node identifiers according to one or more criteria in one of at least two categories; and
- if a peer node identifier is categorized in a first category of said at least categories, selecting the peer node identifier as a peer node to be used for communicating through the peer-to-peer protocol, preferably a peer-to-peer file sharing protocol.

12. Method of claim 11, wherein, if a peer node identifier is categorized in the second category of said at least two categories, a set of selection rules is applied.

13. Method of claim 11 or 12, wherein said of one or more criteria are updated by an operator from a remote location.

14. Method of any of the claims 11-13, wherein said categorizing according to one or more criteria comprises:
- using a weight value based on characteristics of the peer node associated with said peer node identifier; and/or
- using an IP-address and/or a UDP/TCP-port of the peer node associated with said peer node identifier; and/or
- verifying whether an IP-address associated with a peer node identifier belongs to a predefined subnet, and categorizing said peer node identifier accordingly.

15. Computer program for performing the categorizing step and/or the selecting step of the method of any of the claims 11-14.

## Amended claims

### Amended claims in accordance with Rule 137(2) EPC.

**1.** Peer node adapted to exchange data with other peer nodes through a peer-to-peer protocol, **characterized in that** said peer node comprises a categorization and selection module (11, 21, 31) adapted
- to receive peer node identifiers extracted from messages received from said other peer nodes; and
- to categorize said peer node identifiers according to one or more criteria in one of at least two categories; and
- to select a peer node identifier as a peer node identifier to be used by the peer node for communication through the peer-to-peer protocol, if said peer node identifier was categorized in a first category of said at least two categories.

**2.** Peer node of claim 1, wherein said categorization and selection module is further adapted to apply a set of peer node selection rules, if said peer node identifier belongs to a second category of said at least two categories.

**3.** Peer node of claim 1 or 2, wherein the peer node is adapted to distribute data through a peer-to-peer file sharing client and the categorization and selection module is integrated in said peer-to-peer file sharing client.

**4.** Peer node of any of the previous claims, wherein the categorization and selection module is adapted to categorize a peer node identifier using a weight value based on characteristics of the peer node associated with said peer node identifier.

**5.** Peer node of any of the previous claims, wherein the categorization and selection module is adapted to categorize a peer node identifier using an IP-address and/or a UDP/TCP-port of the peer node associated with said peer node identifier.

**6.** Peer node of claim 5, wherein the categorization and selection module is adapted to verify whether an IP-address associated with a peer node identifier belongs to a predefined subnet, and to categorize said peer node identifier accordingly.

**7.** Peer node of any of the previous claims, wherein the categorization and selection module is adapted to categorize a peer node identifier in either one of two categories: a preferred peer node category or a non-preferred peer node category.

**8.** Peer node of any of the previous claims, wherein the categorization and selection module is adapted to obtain the number of IP-hops between the peer node and another peer node associated with the peer node identifier, or a variable representative for said number; and to take into account said number or variable when categorizing said peer node identifier; and/or
to obtain the number of successful interactions between the peer node and another peer node associated with the peer node identifier, or a variable representative for said number; and to take into account said number or variable when categorizing said peer node identifier.

**9.** Peer node of any of the previous claims, wherein the peer node further comprises a connection set-up module adapted to set-up a connection for data download to a peer node taking into account the category associated with said peer node as determined by the categorization and selection module.

**10.** Peer node of any of the previous claims, wherein the peer node comprises a Peer Exchange (PEX) client and/or a Distributed Hash Table (DHT) client and/or a Local Peer Discovery (LPD) client and/or a tracker oriented BitTorrent signalling client.

**11.** Method for selecting a peer node identifier to be used for communicating between peer nodes through a peer-to-peer protocol, said method comprising at a peer node:
- receiving messages from other peer nodes containing one or more peer node identifiers (40); **characterized in that** the method further comprises at said peer node:
- categorizing each peer node identifier of said one or more peer node identifiers according to one or more criteria in one of at least two categories (43a-43c); and
- if a peer node identifier is categorized in a first category of said at least categories, selecting the peer node identifier as a peer node identifier to be used by the peer node for communicating through the peer-to-peer protocol (44a), preferably a peer-to-peer file sharing protocol.

**12.** Method of claim 11, wherein, if a peer node identifier is categorized in the second category of said at least two categories, a set of selection rules is applied.

**13.** Method of claim 11 or 12, wherein said of one or more criteria are updated by an operator from a remote location.

**14.** Method of any of the claims 11-13, wherein said categorizing according to one or more criteria comprises:
- using a weight value based on characteristics of the peer node associated with said peer node identifier; and/or
- using an IP-address and/or a UDP/TCP-port of the peer node associated with said peer node identifier; and/or
- verifying whether an IP-address associated with a peer node identifier belongs to a predefined subnet, and categorizing said peer node identifier accordingly.

**15.** Computer program for performing the categorizing step and/or the selecting step of the method of any of the claims 11-14.
